# EUROPEAN PATENT SPECIFICATION

(11) **EP 1 387 422 B1**
(45) Date of publication and mention of the grant of the patent: **06.04.2016**
(21) Application number: 02017238.3
(22) Date of filing: 31.07.2002
(51) Int. Cl.: B01J 35/06, B01J 37/02, H01M 4/88, C25B 9/10, H01M 8/10, B01J 23/40, B41M 1/06, B41M 1/12, B41M 1/30, B41M 3/00, H01M 4/86

(54) **Process for the manufacture of catalyst-coated substrates**
Verfahren zur Herstellung von mit Katalysator beschichteten Substraten
Procédé de fabrication de substrats à revêtement catalytique

(43) Date of publication of application: 04.02.2004
(73) Proprietor: Umicore AG & Co. KG, 63457 Hanau-Wolfgang (DE)
(72) Inventor: Hohenthanner, Claus-Rupert, 63457 Hanau (DE); Krämling, Markus, 61169 Friedberg (DE); Mecklenburg, André, 63457 Hanau (DE)
(74) Representative: Vossius & Partner Patentanwälte Rechtsanwälte mbB

(56) References cited:
- EP-A- 0 731 520
- EP-A- 1 037 295
- EP-A- 1 176 652
- US-A- 5 778 789
- US-A- 6 073 554

## Description

The invention relates to the field of electrochemical cells and fuel cells, more specifically to polymer-electrolyte-membrane fuel cells (PEMFC) and direct methanol fuel cells (DMFC) and describes a process for the manufacture of catalyst-coated substrates. The catalyst-coated substrates, e.g. catalyst-coated membranes ("CCMs"), catalyst-coated backings ("CCBs") and other catalyst-coated tape materials, are manufactured in a new process comprising the application of water-based catalyst inks onto the substrates under controlled relative humidity and temperature. In a subsequent step, the substrates are held at this controlled humidity and temperature for a certain period of time to achieve leveling of the ink deposits. After the drying step at elevated temperatures in the range of 40 to 150°C for 1 to 10 minutes, very smooth catalyst layers are obtained and the production process is improved. The coating compartment and the leveling compartment are independently of each other maintained at a humidity of 60 to 100% relative humidity and at a temperature in the range of 10 to 60°C.

The catalyst-coated membranes (CCMs), catalyst-coated backings (CCBs) and catalyst-coated tapes manufactured according to this process can be used for production of three-layer and five-layer membrane-electrode-assemblies (MEAs). These MEAs find use as components for PEMFC and DMFC stacks.

Fuel cells convert a fuel and an oxidising agent into electricity, heat and water at two spatially separated electrodes. Hydrogen or a hydrogen-rich gas can be used as the fuel and oxygen or air as the oxidising agent. The energy conversion process in the fuel cell is distinguished by particularly high efficiency. For this reason, fuel cells are gaining increasing importance for mobile, stationary and portable applications.

The polymer electrolyte membrane fuel cell (PEMFC) and the direct methanol fuel cell (DMFC, a variation of the PEMFC, powered directly by methanol instead of hydrogen) are suitable for use as energy converting devices due to their compact design, their power density and high efficiency. The technology of fuel cells is broadly described in the literature, see for example K. Kordesch and G. Simader, "Fuel Cells and its Application", VCH Verlag Chemie, Weinheim (Germany), 1996.

In the following section, the technical terms used in the present invention are described in greater detail:
A catalyst-coated membrane (hereinafter abbreviated "CCM") comprises a polymer electrolyte membrane which is provided on both sides with a catalytically active layer. One of the layers takes the form of an anode for the oxidation of hydrogen and the second layer takes the form of a cathode for the reduction of oxygen. As the CCM consists of three layers (anode catalyst layer, ionomer membrane and cathode catalyst layer), it is often referred to as "three-layer MEA".

Gas diffusion layers ("GDLs"), sometimes referred to as gas diffusion substrates or backings, are placed onto the anode and cathode layers of the CCM in order to bring the gaseous reaction media (hydrogen and air) to the catalytically active layers and, at the same time, to establish an electrical contact. GDLs usually consist of carbon-based substrates, such as carbon fibre paper or carbon fabric, which are highly porous and allow the reaction gases a good access to the electrodes. Furthermore, they are hydrophobic in order to remove the product water from the fuel cell. GDLs can be coated with a microlayer to improve the contact to the membrane. The microlayer usually consists of a mixture of electrically conducting carbon black and a hydrophobic polymer, e.g. polytetrafluoroethylene (PTFE). The GDLs can be tailored specifically into anode-type GDLs or cathode-type GDLs, depending on which side they are built into a MEA. Furthermore, they can be coated with a catalyst layer and subsequently laminated to the ionomer membrane. These catalyst-coated GDLs are frequently referred to as "catalyst-coated backings" (abbreviated "CCBs") or gas diffusion electrodes ("GDEs").

A membrane-electrode-assembly ("five-layer MEA") is the central component in a polymer-electrolyte-membrane (PEM) fuel cell and consists of five layers: The anode GDL, the anode catalyst layer, the ionomer membrane, the cathode catalyst layer and the cathode GDL. A MEA can be manufactured by combining a CCM with two GDLs (on the anode and the cathode side) or, alternatively, by combining an ionomer membrane with two catalyst-coated backings (CCBs) at the anode and the cathode side. In both cases, a five-layer MEA product is obtained.

The anode and cathode catalyst layers contain electrocatalysts, which catalyse the respective reaction (oxidation of hydrogen at the anode and reduction of oxygen at the cathode). The metals of the platinum group of the periodic table are preferably used as the catalytically active components. For the most part, supported catalysts are used, in which the catalytically active platinum group metals have been fixed in nano-sized particle form to the surface of a conductive support material. The average particle size of the platinum group metal is between about 1 and 10 nm. Carbon blacks with particle sizes of 10 to 100 nm and high electrical conductivity have proven to be suitable as support materials.

The polymer electrolyte membrane consists of proton-conducting polymer materials. These materials are also referred to below as ionomers. Tetrafluoroethylene-fluorovinyl-ether copolymer with sulfonic acid groups is preferably used. This material is marketed for example by E.I. DuPont under the trade name Nafion^{®}. However, other, especially fluorine-free, ionomer materials such as sulfonated polyether ketones or aryl ketones or polybenzimidazoles may also be used. Suitable ionomer materials are described by O. Savadogo in "Journal of New Materials for Electrochemical Systems" I, 47-66 (1998). For use in fuel cells, these membranes generally have a thickness from 10 to 200 µm.

In the "CCM-technology", the catalyst layers are applied directly onto the ionomer membrane resulting in a catalyst-coated membrane (CCM). This method is described for example in EP 1 037 295 B1, EP 1 176 652 A2 and other pending applications of the applicant.

Alternatively, in the "CCB-technology", the catalyst layers may be applied to the GDL (or "backing") substrates. Two CCBs are then laminated with an ionomer membrane to yield the five-layer MEA.

In a third route, sometimes referred to as "Decal method" and described for example in EP 0 600 888 B1, the catalyst layers are first applied to a inert substrate, for example a PTFE sheet or blank, dried and then transferred to the surface of an ionomer membrane by means of hot-pressing. The CCMs made by this method are combined with GDLs to form a five-layer MEA.

Water-based catalyst inks are well-known in the literature. EP 731 520 A1 discloses an ink containing catalyst, ionomer, water and optionally up to 10 wt.% of additional organic components. These inks reveal a weak adhesion, predominantly to the surface of ionomer membranes. Furthermore, their leveling and wetting characteristics are very poor. Therefore, the ink deposits form a very rough surface and do not wet the substrate completely. A detailed process for application of these inks is not disclosed.

EP 1 176 652 A2 is directed to catalyst inks containing water and linear dialcohols as organic solvents up to a concentration of 50 wt.%. A process for use of these inks is not disclosed.

Additional drawbacks with water-based inks exist on the processing and manufacturing side. The main drawback is the short screen-life of the ink due to rapid evaporation of the main solvent water. This leads to an increase of ink viscosity, which in turn results in a increase of ink deposits on the substrate over the period of operation. Furthermore, the ink dries out very quickly on the screen and this finally causes clogging of the screen. Additionally, the print quality is affected, since poor leveling of the thickened ink occurs and results in weak adhesion to the substrate material.
There were various efforts made to overcome the drawbacks associated with water-based inks in the past. However, none of these efforts address fuel cell technology or catalyst-containing inks for fuel cell applications.

In DE-OS 2 105 742, a printing process suitable for inks with rapidly evaporating and toxic solvents is disclosed. A closed compartment above the screen is applied to the screen printing machine to overcome these problems. A device is added to maintain a saturated atmosphere of solvent above the screen.

In WO 93/03103, water-based chemical compositions suitable for screen printing are described. A method of screen printing with these water-based inks comprising saturating the volume above the printing surface with water vapor is claimed. This printing method is applied for water-based color ink compositions for printing on, for example, textile materials, paper or plastic substrates. A separate leveling step is not disclosed.

It was an objective of the present invention to provide an application process for water-based catalyst inks onto specialty substrates such as, e.g., ionomer membranes and gas diffusion layers. This application process should overcome the problems with water-based inks listed above and should be straight-forward, simple and fast. The application process should be easily scaleable to high-volume manufacturing and be applicable to a continuous production line. Last but not least, the process should be environmentally safe and sustainable.

Thus, a new process for application of water-based catalyst inks to various substrates is provided. These inks can be applied by a printing process (screen printing, stencil printing, offset printing etc.), by doctor-blading, brushing, spraying or by other known coating techniques.

The present invention provides a process for application of a water-based catalyst ink onto a substrate, said ink comprising electrocatalyst, ionomer, water, surfactant and optionally organic solvent, said process comprising the steps of:
(a) coating of a catalyst ink onto a substrate in a compartment with controlled humidity and temperature;
(b) leveling the deposited catalyst ink in a compartment with controlled humidity and temperature; and
(c) drying the catalyst-coated substrate at elevated temperatures in the range of 40 to 150°C for 1 to 10 minutes;
wherein the coating compartment and the leveling compartment are independently of each other maintained at a humidity of 60 to 100 % relative humidity and at a temperature in the range of 10 to 60°C.

In a further embodiment the present invention relates to a device for application of a water-based catalyst ink onto a substrate according to the process as defined above, said device comprising a coating machine with a compartment for catalyst ink application which has controlled relative humidity and temperature and a compartment for leveling of the deposited catalyst ink which has controlled humidity and temperature, said device being adapted for integration into a continuous manufacturing line.

The coating process is performed on a coating machine with a compartment maintaining a controlled humidity in the range of 60 to 100 % relative humidity and at a temperature in the range of 10 to 60°C. Furthermore, the coated substrate is subjected to a leveling process under controlled humidity and temperature conditions within the ranges specified in claim 1, e.g. for 1 to 10 minutes. The humidity and temperature in the coating step and the leveling step can be the same or different. The leveling step can be conducted in a second compartment (leveling compartment) or in the same compartment as the coating step. In this fashion, a smooth, uniform catalyst layer with very low surface roughness is achieved.

In order to achieve optimum results in the coating process of the present application, improved water-based catalyst inks should be used. These new, improved water-based catalyst ink compositions preferably comprise at least one specific surfactant with a vapor pressure in the range of 1 to 600 Pascal (Pa) at ambient temperature (20-25°C). The surfactants improve the wetting and leveling characteristics of the ink, particularly to hydrophobic substrate materials, such as polymer films or PTFE-impregnated backings. The high vapor pressure facilitates the removal of the surfactant(s) after the leveling process at slightly elevated temperatures in the drying stage. As a consequence, less surfactant remains in the printed electrode layers; this in turn leads to an improvement in electrical performance of the electrode layers and, consequently, of the MEAs manufactured with these inks. Suitable surfactants for the present invention are materials with vapor pressures in the range of 1 to 600 Pa, preferably in the range of 400 to 600 Pa at 20-25°C. Examples of suitable classes of surfactants are nonionic, anionic or cationic surfactants, such as fluorinated wetting agents (Fluorad™ types, manufactured by 3M Co.), tetramethyl-decyn-diol-based wetting agents (Surfynol™ types, manufactured by Air Products and Chemicals Inc.), soy-lecithin-based wetting agents or phospho-amino-lipoides and the like. The vapor pressure of the materials can be determined by standard techniques. Lists of such data are also available, e.g. in "CRC Handbook of Chemistry and Physics", CRC Press LLC, Boca Raton (USA).

The catalyst ink comprises electrocatalyst, ionomer and water as a main solvent in addition to the surfactant. The amount of surfactant added is usually in the range of 0.1 to 20 wt.% based on the total composition of the catalyst ink. In addition, the water-based ink may contain organic solvents, additives, defoamers, pore-forming agents and the like. Mixtures of the listed ingredients as well as mixtures of various surfactants may also be used.

A preferred water-based catalyst ink contains 5 to 75 wt.% of electrocatalyst, 10 to 75 wt.% of ionomer solution (water-based or organic solvent-based), 10 to 75 wt.% of (e.g. deionized) water, 0 to 50 wt.% of organic solvent and 0.1 to 20 wt.% of surfactant with a vapor pressure of 1 to 600 Pa. Suitable organic solvents are glycols (e.g. ethylene glycol, diethylene glycol, propylene glycol, dipropylene glycol, butanediol and mixtures thereof), alcohols (e.g. C₁₋₄ alcohols, and mixtures thereof), esters (e.g. esters of C₁₋₄ alcohol with C₁₋₄ carboxylic acid and mixtures thereof), aromatic solvents (e.g. benzene or toluene) and aprotic polar solvents (e.g. N-methylpyrrolidone, ethylene carbonate, propylene carbonate, DMSO) and the like. Preferably, glycols are employed.

The ionomer solutions are commercially available and typically comprise an ionomer in water or an organic solvent. Generally, they contain 5 to 20 wt.-% ionomer. Depending on the type of electrocatalyst, the weight ratio of ionomer to electrocatalyst is usually from 1:1 to 1:15, preferably from 1:1 to 1:10 and more preferably 1:2 to 1:6. The ionomer solution is diluted with water and optionally additional organic solvent to ensure that the resultant ink can be processed.

Suitable electrocatalysts are, e.g. carbon black supported precious metal-based catalysts such as Pt/C or PtRu/C. However, precious metal powders and precious metal blacks as well as inorganic oxides containing precious or non-precious metals can be used.

In a first embodiment of the present invention, the direct coating of a substrate such as an ionomer membrane is performed in a continuous roll-to-roll process. A screen-printer comprising a compartment with controlled relative humidity is used for application of the catalyst ink. After printing, the catalyst ink is leveled in a second compartment with the same relative humidity and subsequently dried. According to this process, a catalyst-coated membrane (CCM) is manufactured.

In a second embodiment of the invention, the catalyst ink is used to prepare a catalyst layer on gas diffusion layers (GDLs) based on a substrate such as a carbon-based material. Again, the application process is performed with a screen-printing device comprising a compartment with controlled relative humidity and a separate compartment for leveling of the ink, however, the process is conducted discontinuously using individual sheets of carbon fiber substrates rather than a substrate in a roll form.

In a third embodiment of the invention, the catalyst ink is deposited onto an inert transfer medium (for example polyester film or tape) in a continuous reel-to-reel process. After leveling and drying, the catalyst deposit is transferred from the polymer film substrate to the surface of an ionomer membrane as an example of a substrate by means of a hot-pressing/lamination process. The CCM manufactured in this embodiment can be subsequently sandwiched between two GDLs without a catalyst layer to yield a 5-layer MEA.

Variations of these embodiments are possible. For example, the CCM can be prepared in a combined process by direct coating of the anode layer by screen printing followed by indirect coating of the cathode layer by a tape-transfer process using a catalyst-coated tape and a hot-pressing step. Furthermore, the coating of GDLs as described in the second embodiment can also be performed in a reel-to-reel process.

In addition to ionomer membranes and carbon fiber substrates, a range of different substrate materials can be coated in the process with water-based catalyst ink. Examples are hydrophobic polymer films (such as polyester, polyimide, polyethylene, PTFE-coated films, etc), transfer tape materials, paper-based materials, decal substrates, metal substrate tapes, and the like. These materials can be used in roll form or as individual sheets.

Additionally, different methods for the application of catalyst inks can be employed (e.g. stencil printing, offset-printing, transfer printing, doctor-blading, brushing, spraying or other known coating techniques).

As for ionomer membranes, various types, such as solid uniform membranes, supported membranes on a polymer film, bi-layer membranes, reinforced ionomer membranes as well as composite membranes can be used.

As for GDLs, various commercially available materials known in fuel cell technology can be processed. Examples are carbon paper, carbon fibers, carbon cloth, woven or nonwoven carbon mesh, needled felt, knitted fabric etc. The porous carbon type supports may be wet proofed and may contain a microlayer.

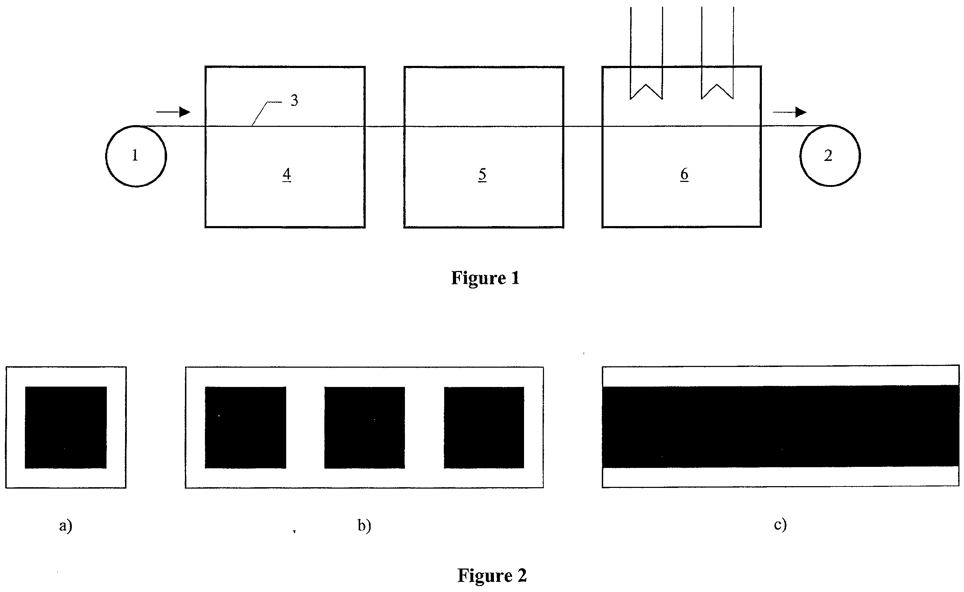

**Figure 1** and **Figure 2** are provided to further explain the invention. **Figure 1** shows a schematic drawing of a reel-to-reel manufacturing line according to the present invention comprising an integrated coating machine. The continuous strip substrate (3) is fed to the screen printer from a feeding roll (1) and guided through three different treatment compartments and then wound up on a receiving roll (2). The first treatment compartment is the coating compartment (4) for printing under controlled humidity and temperature. The strip substrate is then introduced into the leveling compartment (5) which also provides controlled humidity and temperature. Finally, the printed catalyst layers are dried in a drying compartment (6).

The manufacturing line from **Figure 1** allows printing and leveling under different atmospheres. If the atmospheres for printing and leveling are the same, then the coating and leveling compartments can be combined to form one large compartment comprising a coating section and a leveling section.

**Figure 2** shows possible coating patterns on single sheet substrates (a), and on continuous strips b) and c). For coating single sheet substrates, the feeding roll (1) in Figure 1 must be replaced with an appropriate sheet feeding device and further transport devices for transporting single sheets through the manufacturing line must be provided. Receiving roll (2) must be replaced with a single sheet collecting device.

The following examples describe the scope of the invention in more detail. These examples are presented to aid in an understanding of the present invention and are not intended to, and should not be construed to, limit the invention in any way.

### EXAMPLES

### Example 1

This example describes the direct coating of an ionomer membrane using a water-based catalyst ink (preparation of a catalyst-coated membrane, CCM). A water-based catalyst ink was formulated according to the following composition:

| | |
|---|---|
| 20.0 g | Electrocatalyst Elyst A 40 (40 % Pt/C, OMG AG, Hanau) |
| 63.8 g | Nafion^{®} ionomer solution (15 wt.% in water) |
| 15.0 g | Dipropylene glycol |
| 1.2 g | Surfactant Surfynol^{®} 420 (Air Products and Chemicals, Inc.) |
| | |
| 100.0 g | |

The precious metal-based catalyst was thoroughly mixed with the Nafion solution, then the glycol solvent and the surfactant were added and the catalyst ink was prepared by stirring. The coating of catalyst ink onto an ionomer membrane strip (Nafion^{®} 112, thickness 50 µm, width 0.5 m, length 10 m) was performed on a continuous reel-to-reel-coating machine as disclosed in EP 1 037 295 B1. The active area to be printed on the front and the back side of the membrane was 100 cm² (10 x 10 cm). The squeegee area of the screen-printing machine was covered with a sealed compartment, in which a constant relative humidity of 90% at a temperature of 25°C was maintained. To that purpose, water vapor mist was continuously added to the compartment by means of an ultrasonic nebulizer. Additionally, a separate leveling chamber was integrated into the reel-to-reel equipment line, which was also supplied with water vapor from the nebulizer. After the printing step, the membrane strip was transported through the separate leveling chamber with controlled humidity (90% relative humidity, 25°C, residence time 2 minutes). The individual print deposits of the screen mesh pattern were leveled and a smooth, continuous catalyst layer was formed. After having passed the leveling chamber, the coated membrane was dried in a belt dryer by means of hot air. The drying conditions were 100°C for 5 minutes. The Pt-loading after the first print was 0.2 mg Pt/cm².

Subsequently, a second printing step was conducted on the back side of the ionomer membrane. The parameters for printing, leveling and drying were identical to the first run. The total precious metal loading of the membrane after two printing steps (on front and back side) was 0.5 mg Pt/cm². The CCM was cut to an active area of 50 cm² and assembled with two un-catalyzed GDLs to form an MEA showing very good results in the PEMFC performance test (hydrogen/air operation, cf. table 1).

### Example 2

The catalyst ink described in example 1 was used for coating of a GDL substrate. The GDL substrate was prepared as follows: A sheet of carbon fiber paper (length 80 cm, width 80 cm, thickness 350 µm, porosity 85%; supplied by SGL Carbon Group, type SIGRACET) was wet proofed with a water-based PTFE solution (type Hostaflon TF 5032, Dyneon, Gendorf) to a PTFE content of 10 wt.%. After that, a microlayer consisting of carbon black and PTFE was applied to one side of the carbon fiber paper. Then the microlayer-coated surface of the GDL substrate was coated with the water-based catalyst ink by a screen printing process. The squeegee area of the screen-printing machine was covered with a sealed compartment, in which a constant relative humidity of 95% at a temperature of 25°C was maintained. To that purpose, water vapor mist was continuously added to the compartment by means of an ultrasonic nebulizer. After the printing step, the substrate was transferred to a leveling chamber and allowed to level for 2 mins at 95% relative humidity at 25°C. Finally, the catalysed GDL was dried at 120°C for 10 mins. An ionomer membrane (Nafion 112) was sandwiched between two of the catalysed GDLs (cutted to an active area of 50 cm²) and hot-pressed at 150°C and 15 bar pressure for 20 seconds to form a 5-layer MEA. This MEA showed very good results in the PEMFC electrochemical testing (cf. table 1).

### Electrochemical testing

The CCMs/MEAs were tested in a PEMFC single cell with an active area of 50 cm² running on hydrogen/air feed gases. The cell temperature was 80°C, the operating gas pressure was 1.5 bar. Anode humidification was 80°C, cathode humidification was 60°C and stoichiometries were 1.5 (anode) / 2 (cathode). As shown in table 1, the MEAs based on CCMs and CCBs manufactured according to the present invention possess a high cell voltage in the range of 670 mV at a current density of 600 mA/cm² (this results in a power density of about 0.4 W/cm²).

**Table 1 Results of electrochemical testing of five-layer MEAs**

| | Example 1 | Example 2 |
|---|---|---|
| Cell Voltage @ 600mA/cm² (mV) | 670 | 680 |

## Claims

1. A process for application of a water-based catalyst ink onto a substrate, said ink comprising electrocatalyst, ionomer, water, surfactant and optionally organic solvent, said process comprising the steps of:
(a) coating of a catalyst ink onto a substrate in a compartment with controlled humidity and temperature;
(b) leveling the deposited catalyst ink in a compartment with controlled humidity and temperature; and
(c) drying the catalyst-coated substrate at elevated temperatures in the range of 40 to 150°C for 1 to 10 minutes;
wherein the coating compartment and the leveling compartment are independently of each other maintained at a humidity of 60 to 100 % relative humidity and at a temperature in the range of 10 to 60°C.

2. The process according to claim 1, wherein the application of catalyst ink is performed by screen printing, stencil printing, offset printing, brushing, spraying, transfer printing or doctor blading.

3. The process according to claim 1, wherein the substrate is based on a polymer film, an ionomer membrane, a carbon fiber, a carbon cloth, a carbon felt or a paper-type material, said substrate being present as an individual sheet or in continuous roll form.

4. The process according to claim 1, wherein the substrate is a gas diffusion layer (GDL).

5. The process according to claim 1, wherein the substrate is a hydrophobic polymer film, a transfer tape material, a paper-based material, a decal substrate or a metal substrate tape.

6. The process according to any one of claims 1 to 4, wherein the leveling of the deposited catalyst ink is performed for a period of 1 to 10 minutes.

7. The process according to any one of claims 1 to 6, wherein the catalyst-coated substrate is a catalyst-coated membrane (CCM), a catalyst-coated backing (CCB) or a catalyst-coated tape.

8. A device for application of a water-based catalyst ink onto a substrate according to the process according to any of the preceding claims, said device comprising a coating machine with a compartment for catalyst ink application which has controlled relative humidity and temperature and a compartment for leveling of the deposited catalyst ink which has controlled humidity and temperature, said device being adapted for integration into a continuous manufacturing line.

9. The device according to claim 8, wherein the coating compartment and leveling compartment are a single compartment or separate compartments.

10. The device according to claim 8 or 9, wherein the device is a reel-to-reel manufacturing line comprising an integrated coating machine.

## Patentansprüche

1. Verfahren zum Auftragen einer wasserbasierten Katalysatortinte auf ein Substrat, wobei die Tinte Elektrokatalysator, Ionomer, Wasser, Tensid und optional organisches Lösungsmittel umfasst, wobei dieses Verfahren die Schritte umfasst:
(a) Beschichten eines Substrats mit einer Katalysatortinte in einer Kammer mit kontrollierter Feuchtigkeit und Temperatur;
(b) Egalisieren der aufgetragenen Katalysatortinte in einer Kammer mit kontrollierter Feuchtigkeit und Temperatur; und
(c) Trocknen des katalysatorbeschichteten Substrats bei erhöhten Temperaturen im Bereich von 40 bis 150 °C über 1 bis 10 Minuten;
wobei die Beschichtungskammer und die Egalisierungskammer unabhängig voneinander auf einer Feuchtigkeit von 60 bis 100 % relativer Feuchtigkeit und auf einer Temperatur im Bereich von 10 bis 60 °C gehalten werden.

2. Verfahren nach Anspruch 1, wobei das Auftragen der Katalysatortinte durch Siebdruck, Schablonendruck, Offsetdruck, Bürstenstrich, Aufsprühen, Transferdruck oder Rakelstrich ausgeführt wird.

3. Verfahren nach Anspruch 1, wobei das Substrat auf einer Polymerfolie, einer Ionomermembran, einer Kohlenstofffaser, einem Kohlenstofftuch, einem Kohlenstofffilz oder einem papierartigen Material basiert, wobei das Substrat als einzelner Bogen oder in Form einer kontinuierlichen Rolle vorliegt.

4. Verfahren nach Anspruch 1, wobei das Substrat eine Gasdiffusionsschicht (GDL) ist.

5. Verfahren nach Anspruch 1, wobei das Substrat eine hydrophobe Polymerfolie, ein Transferbandmaterial, ein Material auf Papierbasis, ein Decal-Substrat oder ein Metallsubstratband ist.

6. Verfahren nach einem der Ansprüche 1 bis 4, wobei das Egalisieren der aufgetragenen Katalysatortinte über einen Zeitraum von 1 bis 10 Minuten durchgeführt wird.

7. Verfahren nach einem der Ansprüche 1 bis 6, wobei das katalysatorbeschichtete Substrat eine katalysatorbeschichtete Membran (CCM), ein katalysatorbeschichtetes Gasverteilersubstrat (CCB) oder ein katalysatorbeschichtetes Band ist.

8. Vorrichtung zum Auftragen einer wässierbasierten Katalysatortinte auf ein Substrat nach dem Verfahren nach einem der vorhergehenden Ansprüche, wobei die Vorrichtung eine Beschichtungsmaschine mit einer Kammer für den Katalysatortintenauftrag mit kontrollierter relativer Feuchtigkeit und Temperatur und eine Kammer für die Egalisierung der aufgetragenen Katalysatortinte mit kontrollierter Feuchtigkeit und Temperatur umfasst, wobei die Vorrichtung für die Integrierung in eine kontinuierliche Herstellungslinie angepasst ist.

9. Vorrichtung nach Anspruch 8, wobei die Beschichtungskammer und die Egalisierungskammer eine einzige Kammer oder separate Kammern sind.

10. Vorrichtung nach Anspruch 8 oder 9, wobei die Vorrichtung eine Rolle-zu-Rolle-Herstellungslinie ist, die eine integrierte Beschichtungsmaschine umfasst.

## Revendications

1. Procédé d'application d'une encre catalyseur à base d'eau sur un substrat, ladite encre comprenant un électrocatalyseur, un ionomère, de l'eau, un tensioactif, et optionnellement un solvant organique, ledit procédé comprenant les étapes qui consistent à :
(a)appliquer une encre catalyseur de façon à former un revêtement sur un substrat dans un compartiment à humidité et à température contrôlées ;
(b)niveler l'encre catalyseur déposée dans un compartiment à humidité et à température contrôlées ; et
(c)sécher le substrat revêtu de catalyseur à des températures élevées de 40 °C à 150 °C pendant 1 à 10 minutes ;
dans lequel le compartiment de revêtement et le compartiment de nivellement sont maintenus, indépendamment l'un de l'autre, à une humidité de 60 % à 100 % d'humidité relative et à une température de 10 °C à 60 °C.

2. Procédé selon la revendication 1, dans lequel l'application de l'encre catalyseur est réalisée par sérigraphie, impression par stencil, impression offset, application au pinceau, pulvérisation, impression par transfert ou enduction par lame.

3. Procédé selon la revendication 1, dans lequel le substrat est à base d'un film polymère, d'une membrane ionomère, d'une fibre de carbone, d'une étoffe en carbone, d'un feutre en carbone ou d'un matériau de type papier, ledit substrat étant présent sous la forme d'une feuille individuelle ou d'un rouleau continu.

4. Procédé selon la revendication 1, dans lequel le substrat est une couche de diffusion gazeuse (CDG).

5. Procédé selon la revendication 1, dans lequel le substrat est un film polymère hydrophobe, un matériau de type ruban de transfert, un matériau à base de papier, un substrat de décalcomanie, ou un ruban formant un substrat métallique.

6. Procédé selon l'une quelconque des revendications 1 à 4, dans lequel le nivellement de l'encre catalyseur déposée est réalisé pendant une période de 1 à 10 minutes.

7. Procédé selon l'une quelconque des revendications 1 à 6, dans lequel le substrat revêtu de catalyseur est une membrane revêtue de catalyseur (MRC), un support revêtu de catalyseur (SRC), ou un ruban revêtu de catalyseur.

8. Dispositif pour l'application d'une encre catalyseur à base d'eau sur un substrat selon le procédé selon l'une quelconque des revendications précédentes, ledit dispositif comprenant une machine de revêtement comportant un compartiment pour l'application de l'encre catalyseur dans lequel l'humidité relative et la température sont contrôlées et un compartiment pour le nivellement de l'encre catalyseur déposée dans lequel l'humidité et la température sont contrôlées, ledit dispositif étant conçu pour une intégration dans une chaîne de fabrication en continu.

9. Dispositif selon la revendication 8, dans lequel le compartiment de revêtement et le compartiment de nivellement sont sous la forme d'un seul compartiment ou de compartiments distincts.

10. Dispositif selon la revendication 8 ou 9, le dispositif étant une chaîne de fabrication roll-to-roll comprenant une machine de revêtement intégrée.
